# EUROPÄISCHE PATENTSCHRIFT

(11) **EP 2 299 158 B1**
(45) Veröffentlichungstag und Bekanntmachung des Hinweises auf die Patenterteilung: **01.07.2015**
(21) Anmeldenummer: 10176815.8
(22) Anmeldetag: 15.09.2010
(51) Int. Cl.: F16L 55/027

(54) **Anordnung umfassend einen Schalldämpfer zum Einsatz in einer Flüssigkeit**
Assembly comprising an acoustic baffler for use in a fluid
Agencement comprenant un amortisseur de bruit pour l'utilisation dans un fluide

(30) Priorität: 15.09.2009 DE 102009041582
(43) Veröffentlichungstag der Anmeldung: 23.03.2011
(73) Patentinhaber: Schwäbische Hüttenwerke Automotive GmbH, 73433 Aalen-Wasseralfingen (DE)
(72) Erfinder: Lamparski, Christof, Dr., 88441 Mittelbiberach (DE); Preisler, Lothar, 88427 Bad Schussenried (DE)
(74) Vertreter: Schwabe - Sandmair - Marx

(56) Entgegenhaltungen:
- WO-A2-2005/017465
- US-A- 2 372 587
- US-A- 3 374 858

## Beschreibung

Die Erfindung betrifft eine Anordnung umfassend einen Schalldämpfer zum Einsatz in einer Flüssigkeit, vorzugsweise in einem Öl. Der Schalldämpfer kann beispielsweise eingesetzt werden in einem Ansaugtrakt einer Motorölpumpe in einem Kraftfahrzeug.

Aus dem Stand der Technik ist es bekannt, mit einer Motorölpumpe Motoröl aus einer Ölwanne zu saugen. Bauweisenbedingt kann die Pumpe periodisch wiederkehrende Druckschwankungen erzeugen, die sich im Ansaugtrakt entgegen der Strömungsrichtung des Öls in Richtung Ölwanne fortpflanzen. Diese Druckschwankungen, die auch als Schall bezeichnet werden können, sind in der Lage, die Ölwanne zum Schwingen anzuregen bzw. in Resonanz zu bringen. Das durch die schwingende Ölwanne erzeugte Geräusch sticht aus dem Gesamtgeräusch des Fahrzeugs heraus, insbesondere bei geringen Motorgeräuschen bzw. Drehzahlen. Da die Eigenfrequenz der Ölwanne oft unter 2000 Hz liegt, fällt das Geräusch der Ölwanne insbesondere bei geringen Drehzahlen als störend auf. Die Anregungsfrequenz, d. h. die durch die Ölpumpe erzeugte Frequenz ist in der Regel keine gleichmäßige Sinusfrequenz, sondern setzt sich aus mehreren Einzelfrequenzen zusammen, wobei die höheren Frequenzanteile ein hörbares "Kreischen" erzeugen.

Eine einen Schalldämpfer umfassende Anordnung nach dem Oberbegriff des Anspruchs 1 ist aus der US 3 374 858 A bekannt.

Aus der DE 77 02 051 U1 ist ein schalldämpfender Saugkopf zur Dämpfung des Geräuschs von Flüssigkeitspumpen am Boden von Gehäusen oder Vorratsbehältern, insbesondere von Ölwannen von Brennkraftmaschinen bekannt. Der Saugkopf weist einen Raum auf, der mit seitlichen Öffnungen mit der Umgebung verbunden ist.

Aus der JP 2004019826 A ist eine Schalldämpfungseinrichtung bekannt, die ein rohrförmiges Stück, das innerhalb eines anderen Rohrs angeordnet ist, aufweist. Aus der JP 2004076762 A ist eine Schalldämpfungseinrichtung mit einem Rohr bekannt, das eine unregelmäßig geformte Rohrwandung aufweist.

Aus der DE 295 26 00 C2 ist eine Vorrichtung zum Abbau von statischen und dynamischen Drücken in Rohrleitungen mit mindestens einem nachgiebig ausgebildeten Teil in einem vorgegebenen Rohrabschnitt und in vorgegebener Lage gegenüber dem Rohr bekannt. Auch die in der DE 74 28 628 U1 gezeigte Geräuschdämpfungseinrichtung weist elastisch nachgiebige Wandteile zur Geräuschdämpfung auf.

Aufgabe der Erfindung ist es, eine Anordnung umfassend einen verbesserten, einfach herstellbaren Schalldämpfer, der in einer Flüssigkeit einsetzbar ist, zu schaffen.

Die Aufgabe wird gelöst durch den Gegenstand des Anspruchs 1. Vorteilhafte Weiterentwicklungen ergeben sich aus den abhängigen Ansprüchen.

Die Erfindung geht aus von einem Schalldämpfer zum Einsatz in einer Flüssigkeit, oder einem Flüssigkeitsschalldämpfer, der in ihn einlaufende Schallwellen zumindest teilweise dämpft oder filtert. Beispielsweise können sich die einlaufenden Schallwellen aus mehreren Frequenzen zusammensetzen, von denen nur ein Teil herausgefiltert oder gedämpft wird. Der Schalldämpfer kann als ein in einer Flüssigkeitsleitung einsetzbarer, insbesondere starrer oder im Wesentlichen nicht verformbarer Einsatz ausgestaltet sein. Erfindungsgemäß ist es vorgesehen, dass der Schalldämpfer einen größeren Durchmesser als Länge aufweist. Dadurch kann der Schalldämpfer Platz sparend oder bei beengten Platzverhältnissen eingesetzt oder verwendet werden. Die Flüssigkeitsleitung kann einen Hohlquerschnitt aufweisen, der den Schalldämpfer, insbesondere im Wesentlichen flüssigkeitsdicht umgibt. Dadurch kann die Flüssigkeit gezwungen werden, den Schalldämpfer zu durchfließen statt an ihm vorbeizufließen.

Der Schalldämpfer ist in einer Anordnung eingesetzt, insbesondere für einen Verbrennungsmotor, die eine Pumpe, ein Reservoir für die Flüssigkeit und eine Leitung umfasst, die von dem Reservoir zu der Pumpe führt, wobei der Schalldämpfer zwischen dem Reservoir und der Pumpe angeordnet ist und zwar in der Flüssigkeitsleitung. Bei der Pumpe kann es sich um eine Zahnradpumpe, wie z. B. eine Innen- oder Außenzahnradpumpe, eine Flügelzellenpumpe oder eine Pendelschieberpumpe handeln. Grundsätzlich können auch andere Pumpen eingesetzt werden. Bei dem Reservoir kann es sich z. B. um eine Ölwanne eines Kraftfahrzeugs handeln.

Der Schalldämpfer weist einen Einlassabschnitt für Schallwellen und einen Auslassabschnitt für die Schallwellen auf. Der Einlassabschnitt ist der Bereich, in dem die Schallwellen an den Schalldämpfer treffen. Der Auslassabschnitt ist der Bereich, an dem die Schallwellen den Schalldämpfer verlassen. Da der Schalldämpfer im Ansaugtrakt der Pumpe angeordnet ist, breiten sich die Schallwellen entgegen der Flussrichtung des den Schalldämpfer durchströmenden Mediums aus. Der Auslassabschnitt für die Schallwellen ist dann der Einlassabschnitt für das Medium und der Einlassabschnitt für die Schallwellen ist dann der Auslassabschnitt für das Medium. Bei Anwendungen, bei denen der Schalldämpfer auf der Druckseite, d. h. in Flussrichtung des Mediums flussabwärts der Pumpe angeordnet wäre, würden sich die Schallwellen in Flussrichtung des Mediums ausbreiten, wobei dann der Einlassabschnitt für die Schallwellen dem Einlassabschnitt für das Medium und der Auslassabschnitt für die Schallwellen dem Auslassabschnitt für das Medium entsprechen würde.

Sofern nichts anderes angegeben ist, beziehen sich die Begriffe "Einlassabschnitt" und "Auslassabschnitt" auf die Schallwellen.

Der Schalldämpfer umfasst ferner einen Verbindungsabschnitt, den die Schallwellen auf dem Weg von dem Einlassabschnitt zu dem Auslassabschnitt durchlaufen. Der Verbindungsabschnitt ist von dem Medium durchströmbar. Im Betrieb des im Ansaugtrakt angeordneten Schalldämpfers strömt das Medium vom Auslassabschnitt herkommend zu dem Verbindungsabschnitt in Richtung Einlassabschnitt für die Schallwellen. Insbesondere kann der Verbindungsabschnitt mit einer Einlassöffnung zu dem Einlassabschnitt und mit einer Auslassöffnung zu dem Auslassabschnitt führen oder dorthin münden.

Der Verbindungsabschnitt des Schalldämpfers kann so geformt sein, dass der Schall oder/und die Flüssigkeit zumindest teilweise um die Längsachse des Schalldämpfers, insbesondere in Umfangsrichtung geführt wird. Bevorzugt kann die Ausbreitungsrichtung des Schalls sich um die Längsachse erstrecken. Entsprechend kann die Flussrichtung des den Schalldämpfer durchfließenden Mediums sich um die Längsachse erstrecken. Der Verbindungsabschnitt kann zwischen dem Einlass- und dem Auslassabschnitt gekrümmt sein, insbesondere um die Längsachse, wie z. B. kreisförmig.

Bevorzugt ist der Verbindungsabschnitt ein zumindest teilweise um die Längsachse des Schalldämpfers umlaufender, insbesondere wendelförmiger Kanal. Der Kanal kann in Flussrichtung einen runden oder eckigen, insbesondere kastenförmigen Querschnitt aufweisen.

Der Verbindungsabschnitt kann sich in bevorzugten Ausführungen über einen Bogenwinkel von wenigstens 180°, vorzugsweise wenigstens 360° um die Längsachse krümmen, vorzugsweise kontinuierlich. Alternativ oder zusätzlich kann sich der Verbindungsabschnitt über einen Bogenwinkel kleiner 720° oder 540° um die Längsachse winden. Durch eine wendelförmige Ausgestaltung des Verbindungsabschnitts wird der Verbindungsabschnitt um ein Maß entlang der Längsachse versetzt. Für den Begriff "wendelförmig" wird manchmal auch der Begriff "schraubenförmig" verwendet. In bevorzugten Ausführungen kann der Schalldämpfer nur einen einzigen solchen Verbindungsabschnitt aufweisen.

Beispielsweise kann der Verbindungsabschnitt sich um den Einlassabschnitt erstrecken bzw. krümmen. Der Verbindungsabschnitt kann somit zumindest teilweise den Einlassabschnitt umgeben.

Der Schalldämpfer kann ferner einen Mantelabschnitt aufweisen, der beispielsweise die Kontur des bevorzugt als Einsatz ausgebildeten Schalldämpfers bildet. Der Mantelabschnitt kann sich über den Umfang des Schalldämpfers erstrecken. Bevorzugt ist der Verbindungsabschnitt zum Mantelabschnitt hin offen. Der Querschnitt des Verbindungsabschnitts kann eine offene Seite aufweisen, wobei der Querschnitt im Übrigen geschlossen ist. Der Verbindungsabschnitt ist an seiner zum Mantelabschnitt mündenden offenen Seite verschließbar, beispielsweise indem der Schalldämpfer in die Flüssigkeitsleitung eingesetzt wird, die oder deren Hohlquerschnitt an den Mantelabschnitt angepasst ist, so dass der Verbindungsabschnitt zum Mantelabschnitt hin im Wesentlichen abgedichtet wird. Denkbar ist auch, dass zum Verschließen des zum Mantelabschnitt hin offenen Verbindungsabschnitts ein Hohlkörper, wie z. B. ein Rohr über den Mantelabschnitt geschoben wird. Dieser Hohlkörper kann mit dem Teil, das den Verbindungsabschnitt bildet, den in die Flüssigkeitsleitung einsetzbaren Einsatz bilden. Der Mantelabschnitt ist im Querschnitt bevorzugt rund, insbesondere kreisförmig. Der Mantelabschnitt kann insbesondere zylinderförmig oder kegelförmig sein. Alternativ kann der Mantelabschnitt eine eckige Form aufweisen. Der Hohlkörper, der den Mantelabschnitt umgeben kann, ist bevorzugt an die Form des Mantelabschnitts angepasst.

Der Schalldämpfer kann bevorzugt einen zylindrischen Ringabschnitt aufweisen, der sich um die Längsachse erstreckt und in dem der Verbindungsabschnitt angeordnet ist. Der zylindrische Ringabschnitt kann z. B. in der Gestalt eines dickwandigen Rohrs ausgestaltet sein. Wenngleich bevorzugt ist, dass der Verbindungsabschnitt zum Mantelabschnitt hin offen ist, kann der Verbindungsabschnitt alternativ so in dem Ringabschnitt angeordnet sein, dass er im Querschnitt geschlossen ist.

In bevorzugten Ausführungen weist der Schalldämpfer eine Trennwand auf, die von dem Ringabschnitt umgeben wird und die insbesondere einstückig mit dem Ringabschnitt ist. Insbesondere kann der Einlassabschnitt an einer Seite der Trennwand und der Auslassabschnitt an der anderen Seite der Trennwand angeordnet sein. Die Trennwand kann bevorzugt normal zur Längsachse stehen. Ferner kann die Trennwand einen Boden für einen weiter unten beschriebenen Topf bilden. Die Trennwand kann flüssigkeitsdicht mit dem Ringabschnitt verbunden sein, so dass das den Schalldämpfer durchfließende Medium gezwungen wird, durch den Verbindungsabschnitt zu fließen. Ringabschnitt, Trennwand und Verbindungsabschnitt können z. B. mit einem Gussverfahren aus einem Metall, insbesondere Leichtmetall wie einer Aluminiumlegierung hergestellt werden.

Der Vorteil des hierin beschriebenen Verbindungsabschnitts ist, dass der Schall einen längeren Weg durch das flüssige Medium zurücklegen muss, im Vergleich zu einer Verbindung des Einlassabschnitts und Auslassabschnitts auf kürzestem Wege. Hierdurch werden die Schallwellen gedämpft. Ferner wird durch die Reibung des flüssigen Mediums mit der Wand des Verbindungsquerschnitts die Amplitude der hydraulischen Grundfrequenz verringert. Durch die Bauweise des Schalldämpfers benötigt dieser nur eine kurze Länge in der Flüssigkeitsleitung, so dass diese insgesamt kürzer konzipiert werden kann, wodurch insgesamt weniger Bauraum gebraucht wird. Schließlich kann der Schalldämpfer aus Metallwerkstoffen, insbesondere einstückig geformt sein, wodurch nicht zwingenderweise Verbunde mit einem Kunststoff, wie z. B. Gummi oder mit Kautschuk hergestellt werden muss. Dadurch wird die Vorrichtung insgesamt preiswerter.

Bevorzugt weist die Flächennormale des Querschnitts der Einlassöffnung oder des Querschnitts der Auslassöffnung in Richtung oder quer zur Richtung des Verbindungsabschnitts, insbesondere in Fließrichtung des flüssigen Mediums im Verbindungsabschnitt. Beispielsweise können die Flächennormalen des Querschnitts der Einlassöffnung und der Auslassöffnung jeweils in Richtung oder quer zur Richtung des Verbindungsabschnitts weisen. Bevorzugt kann die Flächennormale des Querschnitts der Einlassöffnung quer und die Flächennormale des Querschnitts der Auslassöffnung in Richtung des Verbindungsabschnitts oder in Fließrichtung des Mediums im Verbindungsabschnitt weisen. Der umgekehrte Fall ist ebenfalls denkbar. Der Querschnitt kann sich anhand der Geometrie der Einlassöffnung und der Auslassöffnung oder anhand des Fluidstroms bestimmen.

Insbesondere kann der Verbindungsabschnitt, z. B. über die Auslassöffnung mit einer Neigung in den Einlassabschnitt münden, die in Bezug auf eine sich in Längsrichtung des Einlassabschnitts erstreckende zentrale Linie, insbesondere der Längsachse des Schalldämpfers, wenigstens 30°, vorzugsweise wenigstens 60° beträgt. Allgemein bevorzugt entspricht die Längsachse des Schalldämpfers der Abströmrichtung des flüssigen Mediums vom Schalldämpfer.

Insbesondere kann der Verbindungsabschnitt, z. B. über die Auslassöffnung, mit einer Neigung in den Auslassabschnitt münden, die in Bezug auf eine sich in Längsrichtung des Auslassabschnitts erstreckende zentrale Linie, insbesondere der Längsachse des Schalldämpfers, wenigstens 30°, vorzugsweise 60° beträgt. Bevorzugt entspricht die Längsachse der Anströmrichtung des flüssigen Mediums an den Auslassabschnitt.

Insbesondere kann die Flächennormale des Querschnitts der Einlassöffnung oder/und der Auslassöffnung in Umfangsrichtung des Schalldämpfers oder zur Längsachse hin weisen. Bevorzugt weist die Flächennormale des Querschnitts der Einlassöffnung zur Längsachse hin und die Flächennormale des Querschnitts der Auslassöffnung in Umfangsrichtung des Schalldämpfers. Der umgekehrte Fall ist ebenfalls denkbar.

In bevorzugten Ausführungen bildet der Einlassabschnitt einen Topf. Der Topf kann einen Boden, insbesondere die oben erwähnte Trennwand aufweisen. Der Topf kann eine größte Weite aufweisen, die größer ist als eine größte Tiefe des Topfs, oder umgekehrt. Der Topf dient der Schallausbreitung, d. h. die an den Schalldämpfer ankommenden Schallwellen treffen auf den Topf, der bewirkt, dass hohe Frequenzen aus dem ankommenden Schall beseitigt oder zumindest gedämpft werden. Der Verbindungsabschnitt kann bevorzugt über die Einlassöffnung in den Topf münden, vorzugsweise seitlich. Beispielsweise kann der Verbindungsabschnitt in Bezug auf die Längsachse von dem Einlassabschnitt seitlich abzweigen. Der Topf kann z. B. rotationssymmetrisch um die Längsachse des Schalldämpfers sein.

In bevorzugten Ausführungen kann der Auslassabschnitt einen Expansionsraum für die Schallausbreitung bilden. Nach Durchlaufen des Verbindungsabschnitts trifft der Schall in den Auslassabschnitt, wo sich die Schwingungsenergie des durch den Verbindungsabschnitt gedämpften Schalls auf ein großes Volumen verteilt. Hierdurch wird der Schall noch einmal gedämpft.

Bevorzugt verringert sich der Strömungsquerschnitt des Schalldämpfers im Bereich des Übergangs von dem Auslassabschnitt in den Verbindungsabschnitt und/oder von dem Einlassabschnitt in den Verbindungsabschnitt um einen Faktor von wenigstens 1,5. Somit ist der hydraulische Durchmesser des Verbindungsabschnitts geringer als der hydraulische Durchmesser des Einlassabschnitts und des Auslassabschnitts.

Der Schalldämpfer kann für eine Verdrängerpumpe vorzugsweise in einem oder für ein Kraftfahrzeug zur Versorgung eines Aggregats wie z. B. des Motors oder eines Automatikgetriebes, mit der Flüssigkeit (wie z. B. Schmieröl oder Hydraulikflüssigkeit) vorgesehen sein.

Die Erfindung wurde anhand mehrerer vorteilhafter Weiterbildungen beschrieben. Im Folgenden wird die Erfindung anhand von Figuren beschrieben. Die hierbei offenbarten Merkmale bilden je einzeln und in Kombination mit den oben beschriebenen Merkmalen die Erfindung vorteilhaft weiter. Es zeigen:
- Figur 1: eine Draufsicht auf einen Schalldämpfer, insbesondere auf dessen Einlassabschnitt,
- Figur 2: eine Seitenansicht des Schalldämpfers aus Figur 1,
- Figur 3: eine Untersicht des Schalldämpfers aus Figur 1, insbesondere auf dessen Auslassabschnitt,
- Figur 4: eine perspektivische Ansicht des Schalldämpfers aus Figur 1, insbesondere auf dessen Einlassabschnitt,
- Figur 5: eine perspektivische Ansicht des Schalldämpfers aus Figur 1, insbesondere auf dessen Auslassabschnitt, und
- Figur 6: eine Seitenansicht des Schalldämpfers aus Figur 1 im Vollschnitt.

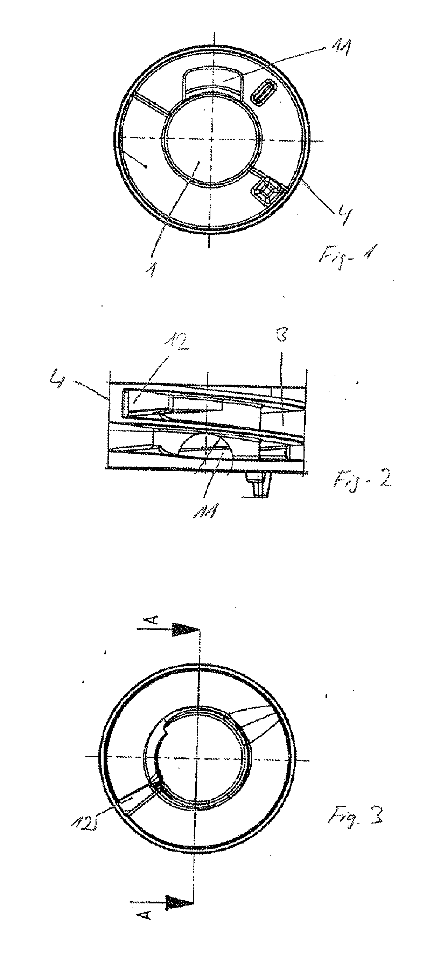

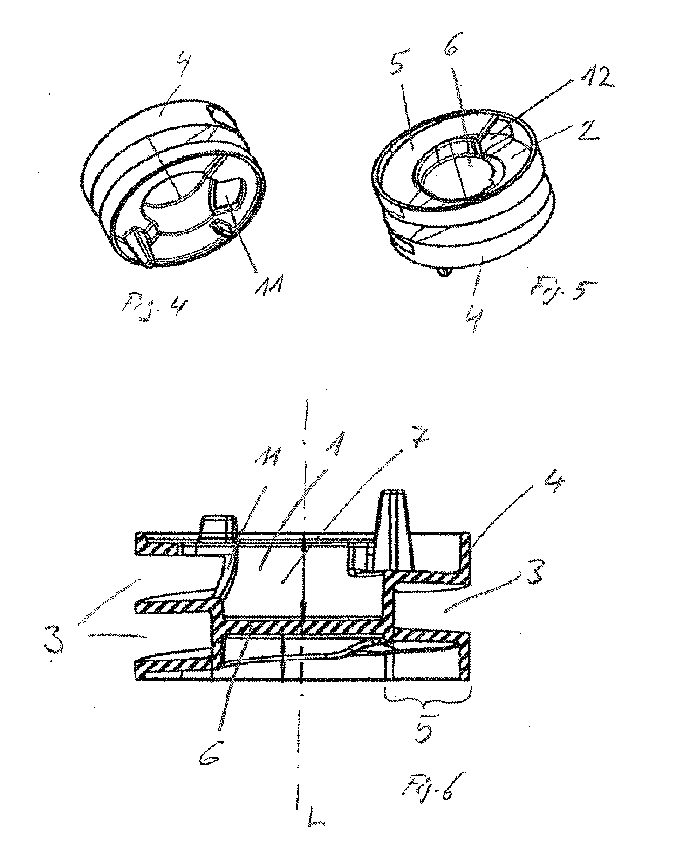

Der Schalldämpfer wird mit Bezug auf die Figuren 1 und 6 beschrieben. Der Schalldämpfer, der als ein in eine Flüssigkeitsleitung einsetzbarer Einsatz ausgestaltet ist, weist einen Einlassabschnitt 1 für die Schallwellen und einen Auslassabschnitt 2 für die Schallwellen auf. Der Schalldämpfer ist im Ansaugbereich einer Pumpe, bevorzugt einer Außenzahnradpumpe angeordnet. Die von dem Eingriff der Zahnräder der Pumpe erzeugten Druckschwankungen breiten sich als Schallwellen entgegen der Flussrichtung des zu fördernden Mediums aus, so dass der Auslassabschnitt für den Schall der Einlassabschnitt für das zu fördernde Medium ist. Dementsprechend ist der Einlassabschnitt für die Schallwellen der Auslassabschnitt für das zu fördernde Medium.

Der Schalldämpfer weist einen Verbindungsabschnitt 3 auf, den die Schallwellen auf dem Weg von dem Einlassabschnitt 1 zu dem Auslassabschnitt 2 durchlaufen. Der Verbindungsabschnitt 3 mündet mit einer Einlassöffnung 11 in den Einlassabschnitt 1 und mit einer Auslassöffnung 12 in den Auslassabschnitt 2. Die Flächennormale des Querschnitts der Einlassöffnung 11 bzw. die Einlassöffnung 11 weist quer zur Richtung des Verbindungsabschnitts 3 bzw. der Flussrichtung des Mediums in dem Verbindungsabschnitt 3. Ferner weist die Normale zur Längsachse L hin und trifft sie in diesem Beispiel mit einem Winkel, der größer als 30° ist.

Die Auslassöffnung 12 bzw. die Flächennormale des Querschnitts der Auslassöffnung 12 weist in Richtung des Verbindungsabschnitts 3 bzw. der Flussrichtung des Mediums im Verbindungsabschnitt 3. Die Flächennormale weist somit in Umfangsrichtung des Schalldämpfers.

Der Schalldämpfer weist eine zylindrische Außenform, insbesondere einen sich über den Umfang erstreckenden, zylindrischen Mantelabschnitt 4 auf, mit dem der Schalldämpfer in einem Hohlquerschnitt anordenbar ist, wie z. B. in einer Flüssigkeitsleitung.

Der Verbindungsabschnitt 3 ist so geformt, dass der Schall oder/und die Flüssigkeit zumindest teilweise um die Längsachse L geführt wird. Das in dem Verbindungsabschnitt 3 fließende Medium und der sich entgegen der Flussrichtung des Mediums ausbreitende Schall fließen somit um die Längsachse L, d. h. in Umfangsrichtung des Schalldämpfers. Der Verbindungsabschnitt 3 erstreckt sich um einen Winkel, der größer als 360°, wie zum Beispiel in etwa 400°, ist, um die Längsachse L und ist als wendelförmiger Kanal ausgestaltet. Der Winkel kann im Allgemeinen beispielsweise zwischen 350° und 500°, insbesondere alternativ zu der abgebildeten Ausführungsform in etwa 450° betragen. Der Verbindungsabschnitt 3 ist im Querschnitt kastenförmig und zum Mantelabschnitt 4 hin offen. Der offene Verbindungsabschnitt 3 wird mittels eines über den Mantelabschnitt 4 angeordneten Hohlkörpers, wie z. B. der Flüssigkeitsleitung, verschlossen.

Der Mantelabschnitt 4 ist kreiszylindrisch. Die Einlassöffnung 11 und die Auslassöffnung 12 sind in Bezug auf die Drehrichtung um die Längsachse L drehwinkelversetzt.

Der Verbindungsabschnitt 3 ist in einem Ringabschnitt 5 angeordnet, der in etwa der Form eines dickwandigen zylindrischen Rohrs entspricht. Bis auf die zum Umfangsabschnitt 4 geöffnete Seite weist der Verbindungsabschnitt 3 eine geschlossene Kontur auf, die von dem Ringabschnitt 5 gebildet wird. Der Ringabschnitt 5 umgibt eine Trennwand 6, die in etwa normal auf die Längsachse L steht. Die Trennwand 6 ist fluiddicht mit dem Ringabschnitt 5 verbunden. Die Trennwand 6 trennt den Einlassabschnitt 1 vom Auslassabschnitt 2, d. h. auf einer Seite der Trennwand 6 befindet sich der Einlassabschnitt 1 und auf der anderen Seite der Auslassabschnitt 2. Hierdurch wird das flüssige Medium gezwungen, den Verbindungsabschnitt 3 zu durchfließen.

Die Trennwand 6 bildet gleichzeitig den Boden eines Topfs, der von dem Einlassabschnitt 1 gebildet wird. Der Topf weist eine größere größte Weite auf als größte Tiefe. Seitlich vom Topf, d. h. auf der Seitenumfassung, die insbesondere rotationssymmetrisch um die Längsachse L ist, ist die Einlassöffnung 11 angeordnet, über die der Verbindungsabschnitt 3 zum Einlassabschnitt 1 hin mündet.

Die Trennwand 6 ist von der am Auslassabschnitt 2 des Schalldämpfers angeordneten Stirnseite in Richtung Einlassabschnitt 1 zurückversetzt.

Durch die Wendel- oder Schraubenform des Verbindungsabschnitts 3 wird der Weg des Schalls im Vergleich zu einer geradlinigen Verbindung des Einlassabschnitts 1 mit dem Auslassabschnitt 2 verlängert. Dadurch und durch die im Verbindungsabschnitt 3 stattfindende Fluidreibung wird der Schall gedämpft.

Der Schalldämpfer ist aus einer Aluminiumlegierung im Gussverfahren hergestellt. Bevorzugt sind die Stirnseiten des Schalldämpfers spanabhebend, wie z. B. durch Drehen bearbeitet. Bevorzugt ist auch der Mantelabschnitt 4 spanabhebend, wie hier durch Drehen, bearbeitet.

Der Schalldämpfer kann vorteilhaft aus einem Material, d. h. aus einem metallischen Werkstoff gebildet werden, wobei der Verbund eines Metalls mit einem Kunststoff oder Kautschuk vermieden werden kann. Hierdurch ist die Vorrichtung preiswerter herzustellen.

## Patentansprüche

1. Anordnung, umfassend einen Schalldämpfer für eine Flüssigkeit, der Schalldämpfer umfassend:
a) einen Einlassabschnitt (1) für Schallwellen,
b) einen Auslassabschnitt (2) für die Schallwellen,
c) einen Verbindungsabschnitt (3), den die Schallwellen auf dem Weg von dem Einlassabschnitt (1) zu dem Auslassabschnitt (2) durchlaufen,
d) wobei der Verbindungsabschnitt (3) so geformt ist, dass der Schall oder/und die Flüssigkeit zumindest teilweise um eine Längsachse (L) des Schalldämpfers geführt wird,
**dadurch gekennzeichnet, dass**
e) die Anordnung ferner eine Pumpe, eine Ölwanne und eine Leitung, die von der Ölwanne zu der Pumpe führt, umfasst, wobei der Schalldämpfer in dem Ansaugtrakt der Pumpe in der Flüssigkeitsleitung zwischen der Ölwanne und der Pumpe angeordnet ist, und dass der Durchmesser des Schalldämpfers größer als die Länge des Schalldämpfers ist.

2. Anordnung nach Anspruch 1, **dadurch gekennzeichnet, dass** der Verbindungsabschnitt (3) ein zumindest teilweise um die Längsachse (L) des Schalldämpfers umlaufender, insbesondere wendelförmiger Kanal ist.

3. Anordnung nach einem der vorhergehenden Ansprüche, **dadurch gekennzeichnet, dass** der Verbindungsabschnitt (3) mit einer Einlassöffnung (11) zu dem Einlassabschnitt (1) und mit einer Auslassöffnung (12) zu dem Auslassabschnitt (2) führt.

4. Anordnung nach dem vorhergehenden Anspruch, **dadurch gekennzeichnet, dass** die Flächennormale des Querschnitts der Einlassöffnung (11) oder/und des Querschnitts der Auslassöffnung (12) in Richtung oder quer zur Richtung des Verbindungsabschnitts (3), insbesondere des Kanals weist.

5. Anordnung nach einem der vorhergehenden Ansprüche, **dadurch gekennzeichnet, dass** der Schalldämpfer einen sich über den Umfang erstreckenden Mantelabschnitt (4) aufweist, wobei der Verbindungsabschnitt (3) zum Mantelabschnitt (4) hin offen ist.

6. Anordnung nach einem der vorhergehenden Ansprüche, **dadurch gekennzeichnet, dass** der Schalldämpfer einen insbesondere zylindrischen Ringabschnitt (5) aufweist, der sich um die Längsachse (L) erstreckt und in dem der Verbindungsabschnitt (3) angeordnet ist.

7. Anordnung nach dem vorhergehenden Anspruch, **dadurch gekennzeichnet, dass** der Schalldämpfer eine Trennwand (6) aufweist, die von dem Ringabschnitt (5) umgeben wird und die insbesondere einstückig mit dem Ringabschnitt (5) ist, wobei bevorzugt der Einlassabschnitt (1) an einer Seite der Trennwand (6) und der Auslassabschnitt (2) an der anderen Seite der Trennwand (6) angeordnet sind.

8. Anordnung nach einem der vorhergehenden Ansprüche, **dadurch gekennzeichnet, dass** der Verbindungsabschnitt (3) im Querschnitt kastenförmig ist.

9. Anordnung nach einem der vorhergehenden Ansprüche, **dadurch gekennzeichnet, dass** der Verbindungsabschnitt (3) mit einer Neigung in den Einlassabschnitt mündet, die in Bezug auf eine sich in Längsrichtung des Einlassabschnitts erstreckende zentrale Linie wenigstens 30°, vorzugsweise wenigstens 60° beträgt, und/oder der Verbindungsabschnitt (3) mit einer Neigung in den Auslassabschnitt (2) mündet, die in Bezug auf eine sich in Längsrichtung des Auslassabschnitts (2) erstreckende zentrale Linie wenigstens 30°, vorzugsweise wenigstens 60° beträgt.

10. Anordnung nach einem der vorhergehenden Ansprüche, **dadurch gekennzeichnet, dass** der Verbindungsabschnitt (3) sich über einen Bogenwinkel von wenigstens 180°, vorzugsweise wenigstens 360° um die Längsachse (L) krümmt, vorzugsweise kontinuierlich.

11. Anordnung nach einem der vorhergehenden Ansprüche, **dadurch gekennzeichnet, dass** sich der Verbindungsabschnitt (3) um den Einlassabschnitt (1) erstreckt.

12. Anordnung nach einem der vorhergehenden Ansprüche, **dadurch gekennzeichnet, dass** der Einlassabschnitt (1) einen Topf (7) mit einem Boden (6) für die Schallausbreitung bildet, wobei der Topf (7) insbesondere eine größte Weite aufweist, die größer ist als eine größte Tiefe des Topfs (7).

13. Anordnung nach einem der vorhergehenden Ansprüche, **dadurch gekennzeichnet, dass** der Auslassabschnitt (2) einen Expansionsraum für die Schallausbreitung bildet, wobei sich bevorzugt der Strömungsquerschnitt des Schalldämpfers im Bereich des Übergangs von dem Auslassabschnitt (2) in den Verbindungsabschnitt (3) und/oder vom Einlassabschnitt (1) in den Verbindungsabschnitt (3) um einen Faktor von wenigstens 1,5 verringert.

14. Anordnung nach einem der vorhergehenden Ansprüche, **dadurch gekennzeichnet, dass** die Flüssigkeitsleitung einen Hohlquerschnitt aufweist, wobei der Schalldämpfer als Einsatz ausgestaltet ist und in die Flüssigkeitsleitung eingesetzt ist, wobei insbesondere der Verbindungsabschnitt (3), der zum Mantelabschnitt (4) hin offen ist, von einem Hohlquerschnitt der Flüssigkeitsleitung verschlossen wird.

15. Anordnung nach einem der vorhergehenden Ansprüche, wobei die Pumpe, eine Zahnradpumpe, eine Flügelzellenpumpe oder eine Pendelschieberpumpe ist.

## Claims

1. An arrangement comprising a sound absorber for a fluid, said sound absorber comprising:
a) an inlet section (1) for sound waves;
b) an outlet section (2) for the sound waves; and
c) a connecting section (3) through which the sound waves pass on their way from the inlet section (1) to the outlet section (2),
d) wherein the connecting section (3) is shaped such that the sound and/or the fluid is at
least partially guided around a longitudinal axis (L) of the sound absorber, **characterised in that**
e) the arrangement also comprises a pump, an oil sump and a conduit which leads from the oil sump to the pump, wherein the sound absorber is arranged in the suction tract of the pump, in the fluid conduit between the oil sump and the pump, and **in that** the diameter of the sound absorber is greater than the length of the sound absorber.

2. The arrangement according to Claim 1, **characterised in that** the connecting section (3) is a channel which at least partially encircles the longitudinal axis (L) of the sound absorber and which is in particular helical.

3. The arrangement according to any one of the preceding claims, **characterised in that** an inlet opening (11) of the connecting section (3) leads to the inlet section (1), and an outlet opening (12) of the connecting section (3) leads to the outlet section (2).

4. The arrangement according to the preceding claim, **characterised in that** the surface normal of the cross-section of the inlet opening (11) and/or the surface normal of the cross-section of the outlet opening (12) points in the direction of or transverse to the direction of the connecting section (3), in particular the channel.

5. The arrangement according to any one of the preceding claims, **characterised in that** the sound absorber comprises a casing section (4) which extends over the circumference, wherein the connecting section (3) is open towards the casing section (4).

6. The arrangement according to any one of the preceding claims, **characterised in that** the sound absorber comprises an annular section (5) which is in particular cylindrical and which extends around the longitudinal axis (L) and in which the connecting section (3) is arranged.

7. The arrangement according to the preceding claim, **characterised in that** the sound absorber comprises a partition wall (6) which is surrounded by the annular section (5) and is in particular integral with the annular section (5), wherein preferably, the inlet section (1) is arranged on one side of the partition wall (6) and the outlet section (2) on the other side of the partition wall (6).

8. The arrangement according to any one of the preceding claims, **characterised in that** the connecting section (3) is box-shaped in cross-section.

9. The arrangement according to any one of the preceding claims, **characterised in that** the connecting section (3) feeds into the inlet section at an inclination of at least 30°, preferably at least 60°, in relation to a central line extending in the longitudinal direction of the inlet section, and/or **in that** the connecting section (3) feeds into the outlet section (2) at an inclination of at least 30°, preferably at least 60°, in relation to a central line extending in the longitudinal direction of the outlet section (2).

10. The arrangement according to any one of the preceding claims, **characterised in that** the connecting section (3) curves around the longitudinal axis (L), preferably continuously, over an arc angle of at least 180°, preferably at least 360°.

11. The arrangement according to any one of the preceding claims, **characterised in that** the connecting section (3) extends around the inlet section (1).

12. The arrangement according to any one of the preceding claims, **characterised in that** the inlet section (1) forms a cup (7) with a base (6) for dispersing the sound, wherein the cup (7) in particular exhibits a maximum width which is greater than a maximum depth of the cup (7).

13. The arrangement according to any one of the preceding claims, **characterised in that** the outlet section (2) forms an expansion space for dispersing the sound, wherein the flow cross-section of the sound absorber is preferably reduced by a factor of at least 1.5 in the region of the transition from the outlet section (2) to the connecting section (3) and/or from the inlet section (1) to the connecting section (3).

14. The arrangement according to any one of the preceding claims, **characterised in that** the fluid conduit exhibits a hollow cross-section, wherein the sound absorber is embodied as an insert and is inserted into the fluid conduit, wherein the connecting section (3) which is open towards the casing section (4) is in particular closed off by a hollow cross-section of the fluid conduit.

15. The arrangement according to any one of the preceding claims, wherein the pump is a toothed wheel pump, a vane cell pump or a pendulum-slide pump.

## Revendications

1. Dispositif comprenant un silencieux pour un liquide, le silencieux comprenant:
a) une partie d'entrée (1) pour des ondes sonores,
b) une partie de sortie (2) pour les ondes sonores,
c) une partie de liaison (3) traversée par les ondes sonores entre la partie d'entrée (1) et la partie de sortie (2),
d) où la partie de liaison (3) est formée de telle manière que le son ou/et le liquide sont menés au moins partiellement autour d'un axe longitudinal (L) du silencieux,
**caractérisé en ce que**
e) le dispositif comprend en outre une pompe, un carter d'huile et une conduite menant du carter d'huile à la pompe, où le silencieux est disposé dans l'admission de la pompe dans la conduite de liquide entre le carter d'huile et la pompe et que le diamètre du silencieux est plus grand que la longueur du silencieux.

2. Dispositif selon la revendication 1, **caractérisé en ce que** la partie de liaison (3) est un canal, en particulier en forme de spirale, entourant au moins partiellement l'axe longitudinal (L) du silencieux.

3. Dispositif selon l'une quelconque des revendications précédentes, **caractérisé en ce que** la partie de liaison (3) mène via une ouverture d'entrée (11) vers la partie d'entrée (1) et via une ouverture de sortie (12) vers la partie de sortie (2).

4. Dispositif selon la revendication précédente, **caractérisé en ce que** la normale à la surface de la section transversale de l'ouverture d'entrée (11) et/ou de la section transversale de l'ouverture de sortie (12) pointe dans la direction ou perpendiculairement à la direction de la partie de liaison (3), en particulier du canal.

5. Dispositif selon l'une quelconque des revendications précédentes, **caractérisé en ce que** le silencieux comporte une partie d'enveloppe (4) s'étendant le long de sa périphérie, où la partie de liaison (3) est ouverte en direction de la partie d'enveloppe (4).

6. Dispositif selon l'une quelconque des revendications précédentes, **caractérisé en ce que** le silencieux comporte une partie annulaire, en particulier cylindrique, qui s'étend autour de l'axe longitudinal (L) et est disposé dans la partie de liaison (3).

7. Dispositif selon la revendication précédente, **caractérisé en ce que** le silencieux comporte une cloison de séparation (6) entourée par la partie annulaire (5) et qui est en particulier formée d'un seul tenant avec la partie annulaire (5), où, de préférence, la partie d'entrée (1) est disposée sur un côté de la paroi de séparation (6) et la partie de sortie (2) sur l'autre côté de la paroi de séparation (6).

8. Dispositif selon l'une quelconque des revendications précédentes, **caractérisé en ce que** la partie de liaison (3) a une section transversale en forme de caisson.

9. Dispositif selon l'une quelconque des revendications précédentes, **caractérisé en ce que** la partie de liaison (3) débouche dans la partie d'entrée avec une inclinaison d'au moins 30°, de préférence d'au moins 60° par rapport à une ligne centrale s'étendant dans la direction longitudinale de la partie d'entrée, et/ou la partie de liaison (3) débouche dans la partie de sortie (2) avec une inclinaison d'au moins 30°, de préférence d'au moins 60° par rapport à une ligne centrale s'étendant dans la direction longitudinale de la partie de sortie (2).

10. Dispositif selon l'une quelconque des revendications précédentes, **caractérisé en ce que** la partie de liaison (3) s'incurve selon un angle d'arc d'au moins 180°, de préférence d'au moins 360° autour de l'axe longitudinal (L), de préférence de manière continue.

11. Dispositif selon l'une quelconque des revendications précédentes, **caractérisé en ce que** la partie de liaison (3) s'étend autour de la partie d'entrée (1).

12. Dispositif selon l'une quelconque des revendications précédentes, **caractérisé en ce que** la partie d'entrée (1) forme un pot (7) avec un fond (6) pour la propagation du son, où le pot (7) comporte en particulier une largeur maximale supérieure à la profondeur maximale du pot (7).

13. Dispositif selon l'une quelconque des revendications précédentes, **caractérisé en ce que** la partie de sortie (2) forme une chambre d'expansion pour la propagation du son, où, de préférence, la section transversale d'écoulement du silencieux diminue d'un facteur d'au moins 1,5 dans la région de la transition de la partie de sortie (2) à a partie de liaison (3) et/ou de la partie d'entrée (1) à la partie de liaison (3).

14. Dispositif selon l'une quelconque des revendications précédentes, **caractérisé en ce que**, la conduite de liquide comporte une section transversale creuse, où le silencieux est configuré comme un insert et est inséré dans la conduite de liquide, où en particulier la partie de liaison (3), ouverte en direction de la partie d'enveloppe (4), est fermée par une section transversale creuse de la conduite de liquide.

15. Dispositif selon l'une quelconque des revendications précédentes, où la pompe est une pompe à engrenages, une pompe cellulaire à ailettes ou une pompe à poussoir pendulaire.
